# EUROPÄISCHE PATENTSCHRIFT

(11) **EP 3 910 215 B1**
(45) Veröffentlichungstag und Bekanntmachung des Hinweises auf die Patenterteilung: **03.05.2023**
(21) Anmeldenummer: 21169947.5
(22) Anmeldetag: 22.04.2021
(51) Int. Cl.: F16H 61/00, F16H 61/02, F16H 57/04

(54) **HYDRAULISCHE ANORDNUNG FÜR EIN FAHRZEUGGETRIEBE**
HYDRAULIC ASSEMBLY FOR A VEHICLE TRANSMISSION
AGENCEMENT HYDRAULIQUE POUR UNE TRANSMISSION DE VÉHICULE

(30) Priorität: 14.05.2020 DE 102020206115
(43) Veröffentlichungstag der Anmeldung: 17.11.2021
(73) Patentinhaber: Deere & Company, Moline, IL 61265 (US)
(72) Erfinder: MEID, MICHAEL, 68163 Mannheim (DE); BILLICH, MANUEL, 68163 Mannheim (DE); BUSOLD, THOMAS, 68163 Mannheim (DE)
(74) Vertreter: Dehnhardt, Florian Christopher

(56) Entgegenhaltungen:
- DE-A1-102013 112 689
- US-A1- 2005 263 352
- US-A1- 2009 158 727

## Beschreibung

Die Erfindung betrifft eine hydraulische Anordnung für ein Fahrzeuggetriebe.

Fahrzeuggetriebe benötigen ein Hydraulikmedium (z.B. Öl), um deren Kupplungen in einem hydraulischen Systemkreislauf zu steuern als auch eine ausreichende Schmierung in einem hydraulischen Schmierungskreislauf zu gewährleisten. Aufgrund der unterschiedlichen hydraulischen Anforderungen ist eine Aufteilung auf zwei Kreisläufe (System und Schmierung) sinnvoll, um Verlustleistungen zu reduzieren und die Effizienz zu erhöhen.

Hydraulische Anordnungen für ein Fahrzeuggetriebe sind zum Beispiel aus der US 2009/158727 A1, der US 2005/263352 A1 oder der DE 10 2013 112689 A1 bekannt.

Der vorliegenden Erfindung liegt die Aufgabe zugrunde, die Effizienz der Arbeitsweise eines hydraulischen Fahrzeuggetriebes weiter zu verbessern.

Diese Aufgabe wird durch eine hydraulische Anordnung mit den Merkmalen des Patentanspruchs 1 gelöst.

Weitere vorteilhafte Ausgestaltungen der erfindungsgemäßen hydraulischen Anordnung gehen aus den Unteransprüchen hervor. Gemäß Patentanspruch 1 weist die hydraulische Anordnung einen hydraulischen Systempfad und einen hydraulischen Schmierungspfad auf. Der Systempfad führt zu einem hydraulischen Systemkreislauf mit einem Systemdruck p_sys, während der Schmierungspfad zu einem hydraulischen Schmierungskreislauf mit einem Schmierungsdruck p_lub führt. Der Systemkreislauf dient insbesondere dazu, eine oder mehrere Kupplungen oder eine Schaltgabel innerhalb des Fahrzeuggetriebes anzusteuern bzw. zu betätigen. Der Schmierungskreislauf dient insbesondere einer kontinuierlichen Schmierung des Fahrzeuggetriebes. Die beiden hydraulischen Pfade sind an der Ausgangsseite einer Abzweigungsstelle hydraulisch angeschlossen. An die Abzweigungsstelle ist eingangsseitig entweder eine Verstellpumpe oder eine mindestens zwei Konstantpumpen aufweisende Pumpenkombination hydraulisch angeschlossen. Weiterhin ist an die Abzweigungsstelle ausgangsseitig in den Systempfad integriert entweder eine Verstellpumpe oder mindestens eine Konstantpumpe hydraulisch angeschlossen.

Konstantpumpen verdrängen bei jeder Umdrehung ein konstantes Hydraulikvolumen, so dass der Volumenstrom bei gleicher Drehzahl der Pumpe konstant bleibt.

Bei Verstellpumpen hingegen kann das hydraulische Verdrängungsvolumen auch bei gleichbleibender Drehzahl der Pumpe verstellt werden. Als Stellgrößen sind verschiedene Parameter denkbar. Beispielsweise kann als Parameter eine Drehzahl der Antriebseinheit für die Verstellpumpe berücksichtigt werden. Insbesondere handelt es sich bei dem Parameter um Größen des Fahrzeuggetriebes, wie z.B. aktueller Hydraulikdruck, insbesondere aktueller Systemdruck p_sys und/oder Schmierungsdruck p_lub, Getriebeeingangsleistung, Drehmoment oder Drehzahl am Getriebeeingang, Schaltvorgänge oder ein geschalteter Gang, Energieintensität der Schaltvorgänge. Die jeweilige Stellgröße kann geeignete Bauteile (z.B. hydromechanisch, elektrohydraulisch, Steuerelektronik) beeinflussen, welche die Verstellpumpe entsprechend verstellen, insbesondere kontinuierlich verstellen. Die bei der hydraulischen Anordnung eingesetzten Verstellpumpen können deshalb technisch einfach an unterschiedliche Zustände des Fahrzeuggetriebes angepasst werden und hierdurch unnötige Leistungsverluste reduzieren sowie die Effizienz verbessern.

Unabhängig von dem Pumpentyp (Konstantpumpe oder Verstellpumpe) kann sich die Pumpendrehzahl und somit das hydraulische Verdrängungsvolumen bzw. der Volumenstrom in Abhängigkeit von der Antriebsdrehzahl einer die Pumpe antreibenden Antriebseinheit (z.B. Antriebsmotor bzw. Verbrennungsmotor des Fahrzeugs, Elektromotor) ändern.

Die verwendeten Pumpen können unterschiedlich dimensioniert sein. Insbesondere können mehrere Konstantpumpen bei gleicher Pumpendrehzahl unterschiedliche Verdrängungsvolumina bzw. Volumenströme aufweisen.

Die Pumpenkombination mit mindestens zwei Konstantpumpen kann unterschiedliche Ausführungsformen hinsichtlich ihres Aufbaus haben. Beispielsweise ist die Pumpenkombination mit einem einzigen Pumpengehäuse oder mit einem separaten Pumpengehäuse für jede vorhandene Konstantpumpe realisiert.

Durch die vorbeschriebene variable Anzahl und Typen von Pumpen innerhalb der hydraulischen Anordnung kann letztere flexibel an unterschiedliche Anforderungen des Fahrzeuggetriebes angepasst werden. Diese Anforderungen betreffen beispielsweise bedarfsgerechte System- und Schmierungsdrücke p_sys, p_lub, die Höhe der hydraulischen Leistungsverluste, der konstruktionstechnische Aufbau des Fahrzeuggetriebes oder die Einbauverhältnisse am Fahrzeug. Auf diese Weise kann die hydraulische Anordnung und somit das Fahrzeuggetriebe gezielt für das betreffende Fahrzeug optimiert werden. Dies betrifft sowohl den grundsätzlichen Aufbau der hydraulischen Anordnung als auch Anpassungen der hydraulischen Druckverhältnisse während des Einsatzes des Fahrzeuggetriebes. Für diese Optimierung können ohne nennenswerten Mehraufwand standardmäßig verfügbare Bauteile in Form unterschiedlicher Typen von Pumpen und einer unterschiedlichen Anzahl von Pumpen verwendet werden.

Die an der Abzweigungsstelle eingangsseitig vorhandene Verstellpumpe oder Pumpenkombination kann den Schmierungsdruck p_lub beeinflussen. Eine Beeinflussung des Systemdruckes p_sys hingegen ist mittels der in den Systempfad integrierten Verstellpumpe oder der mindestens einen Konstantpumpe in Kombination mit einem Regelventil möglich.

Wie bereits erwähnt, wird die hydraulische Anordnung bei einem Fahrzeuggetriebe eingesetzt. Das Fahrzeug ist insbesondere ein Nutzfahrzeug wie etwa ein landwirtschaftliches Nutzfahrzeug (z.B. Schlepper, Traktor), ein forstwirtschaftliches Nutzfahrzeug oder eine Baumaschine.

Vorzugsweise enthält die hydraulische Anordnung an technisch sinnvollen Stellen mindestens eines der folgenden Bauteile oder mindestens eine der folgenden Funktionseinheiten: ein Saugsieb an der Saugseite einer Pumpe, einen Filter zur Reinigung des Hydraulikmediums, einen Filter-Bypass mit einem Differentialdrucksensor oder dergleichen zur Überprüfung des Druckabfalles und Verschmutzungsgrades am Filter, eine an den jeweiligen Kreislauf angeschlossene hydraulische Speichereinheit (z.B. Membranspeicher, Akkumulator) zur Druckstabilisierung des Kreislaufes (System oder Schmierung), Drucksensoren zur Erfassung des aktuellen Systemdruckes p_sys und des aktuellen Schmierungsdruckes p_lub, einen Kühler zur Konditionierung des Hydraulikmediums, einen Kühler-Bypass zur Begrenzung einer an dem Kühler auftretenden Druckdifferenz bzw. zur Regelung der Kühlleistung.

Erfindungsgemäß ist in den hydraulischen Systempfad eine Pumpengruppe eingebaut bzw. integriert, welche mindestens zwei Konstantpumpen aufweist. Hinsichtlich der Anzahl der Pumpengehäuse gilt entsprechend die obige Beschreibung zur Pumpenkombination.

Insbesondere sind genau zwei parallelgeschaltete Konstantpumpen für die Pumpengruppe vorgesehen. Mittels der Pumpengruppe ist es möglich, das in Richtung des Systemkreislaufes zu fördernde Hydraulikmedium (Volumenstrom, Verdrängungsvolumen, Fördermenge, etc.) bedarfsgerechter zu variieren, ohne dass hierzu Verstellpumpen erforderlich sind.

Beispielsweise haben mehrere Konstantpumpen der Pumpengruppe bei gleicher Pumpendrehzahl unterschiedliche Verdrängungsvolumina, welche wahlweise durch geeignete technische Maßnahmen (z.B. ein zwischen mehreren Schaltstellungen umschaltbares Hydraulikventil) zu dem Systemkreislauf gefördert werden können. Eine Konstantpumpe mit höherem Verdrängungsvolumen wird vorzugsweise zur Erzielung eines verhältnismäßig hohen Volumenstroms in Verbindung mit bei vergleichsweise niedrigen Antriebsdrehzahlen verwendet, während eine Konstantpumpe mit niedrigerem Verdrängungsvolumen vorzugsweise zur Erzielung eines verhältnismäßig niedrigen Volumenstroms in Verbindung mit vergleichsweise hohen Antriebsdrehzahlen im Systemkreislauf verwendet wird. Hierdurch ermöglichen mehrere unterschiedlich dimensionierte Konstantpumpen bei niedrigen hydraulischen Verlustleistungen eine bedarfsgerechte Anpassung der Pumpengruppe an den Systemkreislauf.

Vorzugsweise ist zwischen der Abzweigungsstelle und deren eingangsseitiger Pumpenkombination ein Auswahl-Ventil angeschlossen, welches mehrere unterschiedliche Schaltstellungen aufweist, um unterschiedliche hydraulische Verbindungen zwischen der Pumpenkombination mit dem Eingang der Abzweigungsstelle realisieren zu können. Hierdurch ist beispielsweise mit mindestens zwei parallel geschalteten Konstantpumpen und einem entsprechend ausgestalteten Auswahl-Ventil am Eingang der Abzweigungsstelle eine diskrete Veränderung des Volumenstromes möglich. Diese diskrete Veränderung kann in vielen Anwendungsfällen ohne nennenswerte Einbußen hinsichtlich der Effizienz eine kontinuierliche Veränderung des Volumenstromes durch eine Verstellpumpe ersetzen.

Erfindungsgemäß ist an der im Systempfad integrierten Pumpengruppe ausgangsseitig ein Auswahl-Ventil angeschlossen. Dieses Auswahl-Ventil hat mehrere unterschiedliche Schaltstellungen für unterschiedliche hydraulische Verbindungen zwischen der Pumpengruppe mit dem Systemkreislauf. Hierdurch sind technisch einfach diskrete Veränderungen des Volumenstromes in Richtung des Systemkreislaufes möglich. Diese diskrete Veränderung kann in vielen Anwendungsfällen ohne nennenswerte Einbußen hinsichtlich der Effizienz eine kontinuierliche Veränderung des Volumenstromes durch eine Verstellpumpe ersetzen.

Das der Pumpenkombination zugeordnete Auswahl-Ventil einerseits und das der Pumpengruppe zugeordnete Auswahl-Ventil andererseits weist vorzugsweise eine unterschiedliche Anzahl von Anschlüssen und/oder Schaltstellungen auf. Das jeweilige Auswahl-Ventil ist beispielsweise hydromechanisch oder elektrohydraulisch ausgebildet. Mit dem Auswahl-Ventil kann trotz Verwendung von Konstantpumpen eine bedarfsgerechte diskrete Veränderung des Verdrängungsvolumens bzw. Volumenstromes an der Pumpenkombination oder der Pumpengruppe bei gleichzeitig geringen Verlustleistungen realisiert werden.

Im Falle einer elektrohydraulischen Ausführungsform weist das jeweilige Auswahl-Ventil mindestens einen Elektromagneten auf, welcher in Abhängigkeit von einer erfassten physikalischen Größe bzw. einem Parameter ansteuerbar ist, um das Auswahl-Ventil bedarfsgerecht in seine unterschiedlichen Schaltstellungen zu überführen. Die erfasste physikalische Größe bzw. der Parameter wird insbesondere in einer geeigneten Steuerelektronik verarbeitet, welche den oder die Elektromagneten entsprechend ansteuert. Als physikalische Größe bzw. Parameter kommen z.B. in Frage: Drehzahl der Antriebseinheit(en) für die Konstantpumpe(n), aktueller Hydraulikdruck, insbesondere Systemdruck p_sys und/oder Schmierungsdruck p_lub, Getriebeeingangsleistung, Drehmoment oder Drehzahl am Getriebeeingang, Schaltvorgänge oder ein geschalteter Gang, Energieintensität der Schaltvorgänge.

Erfindungsgemäß ist an das Auswahl-Ventil des Systempfades ausgangsseitig ein zwischen unterschiedlichen Schaltstellungen umschaltbares Verstärker-Ventil hydraulisch angeschlossen. Das Verstärker-Ventil kann in Abhängigkeit von dem aktuellen Systemdruck p_sys einen parallelen hydraulischen Nebenpfad zwischen dem Auswahl-Ventil des Systempfades und dem Systemkreislauf hydraulisch schließen oder unterbrechen. Die Abhängigkeit der Schaltstellungen von dem aktuellen Systemdruck p_sys kann beispielsweise hydromechanisch (z.B. hydraulischer Steuereingang am Verstärker-Ventil) oder elektrohydraulisch (z.B. Drucksensor und Steuerelektronik für einen Elektromagneten am Verstärker-Ventil) realisiert werden. Die Berücksichtigung des aktuellen Systemdruckes p_sys zur Umschaltung des Verstärker-Ventils ermöglicht eine beschleunigte und automatische Versorgung des Systemkreislaufes mit Hydraulikdruck bei ungünstigen Druckverhältnissen (z.B. bei zu niedrigem Systemdruck p_sys) im Systemkreislauf. Für diese beschleunigte Versorgung des Systemkreislaufes mit Hydraulikdruck sind das Auswahl-Ventil des Systempfades und das Verstärker-Ventil vorzugsweise derart ausgestaltet und geschaltet, dass mehrere oder sämtliche Konstantpumpen der Pumpengruppe gleichzeitig - je Konstantpumpe entweder unmittelbar oder zumindest mittelbar über den Nebenpfad - Hydraulikmedium zum Systemkreislauf fördern.

Insbesondere nimmt das Verstärker-Ventil bei einem Systemdruck p_sys unterhalb eines vorbestimmten minimalen Systemdruckes p_sys-min eine Verstärker-Schaltstellung ein zum hydraulischen Schließen des parallelen Nebenpfades. Diese Verstärker-Schaltstellung entspricht vorzugsweise einer Grundstellung des Verstärker-Ventils bei einem Systemstart, z.B. beim Starten des Fahrzeugs.

Weiterhin ist das Verstärker-Ventil insbesondere derart dimensioniert, dass es ausgehend von einem steigenden Systemdruck p_sys nach Erreichen oder Überschreiten des vorbestimmten minimalen Systemdruckes p_sys-min eine andere Schaltstellung einnimmt für eine hydraulische Verbindung zwischen dem Auswahl-Ventil des Systempfades und dem Schmierungskreislauf. In dieser Schaltstellung wird das ursprünglich für eine beschleunigte Versorgung des Systemkreislaufes geförderte Hydraulikmedium in Richtung des Schmierungskreislaufes gefördert und wirkt somit vorteilhaft zu dessen Druckstabilisierung.

In einer weiteren bevorzugten Ausführungsform ist zwischen dem Systemkreislauf und dem Schmierungskreislauf ein Steuerventil hydraulisch angeschlossen, welches zwei unterschiedliche Schaltstellungen aufweist derart, dass das Steuerventil in Abhängigkeit von seiner Schaltstellung als eine hydraulische Verbindung oder als eine hydraulische Unterbrechung zwischen beiden Kreisläufen wirkt. Hierdurch ist es beispielsweise möglich, zu hohe Systemdrücke p_sys funktionstechnisch sinnvoll in Richtung des Schmierungskreislaufes abzubauen und folglich Verlustleistungen weiter zu reduzieren.

Zu diesem Zweck ist das Steuerventil insbesondere derart dimensioniert, dass es unterhalb eines vorbestimmten maximalen Systemdruckes p_sys-max eine erste Steuerschaltstellung hat für eine hydraulische Unterbrechung zwischen beiden Kreisläufen. Ausgehend von einem steigenden Systemdruck p_sys nimmt das Steuerventil bei Erreichen oder Überschreiten des vorbestimmten maximalen Systemdruckes p_sys-max eine zweite Steuerschaltstellung ein für eine hydraulische Verbindung zwischen beiden Kreisläufen.

Vorzugsweise enthält die hydraulische Anordnung einen Mediumkühler zur Kühlung des in der Anordnung verwendeten Hydraulikmediums (z.B. Öl). Der Mediumkühler kann beispielsweise in den Schmierungspfad oder Schmierungskreislauf integriert sein, so dass im Systemkreislauf durch einen Mediumkühler bedingte Druckverluste vermieden werden. Alternativ kann der Mediumkühler zwischen der Abzweigungsstelle und deren eingangsseitiger Verstellpumpe oder Pumpenkombination hydraulisch angeschlossen sein. Bei akzeptablen Druckverlusten kann der Mediumkühler auch in den Systempfad oder Systemkreislauf integriert sein.

Insbesondere ist der Mediumkühler aber hydraulisch zwischen dem Systemkreislauf und dem Schmierungskreislauf angeordnet. Hierdurch werden durch den Mediumkühler bedingte Druckverluste sowohl im Systemkreislauf als auch im Schmierungskreislauf vermieden. Außerdem kann mittels einer geeigneten Ventilanordnung zwischen dem Systemkreislauf und dem Schmierungskreislauf dafür gesorgt werden, dass bei nicht benötigten hohen Systemdrücken p_sys überschüssiges Hydraulikmedium des Systemkreislaufes über den Mediumkühler in den Schmierungskreislauf abfließt. Das abfließende Hydraulikmedium wird automatisch gekühlt und trägt gleichzeitig zur Druckstabilisierung im Schmierungskreislauf bei.

Die erfindungsgemäße hydraulische Anordnung wird im Folgenden anhand der beigefügten Zeichnungen näher erläutert. Dabei sind hinsichtlich ihrer Funktion übereinstimmende bzw. vergleichbare Bauteile mit denselben Bezugszeichen gekennzeichnet. Es zeigen:
- Fig. 1: ein hydraulischer Schaltplan mit der hydraulischen Anordnung in einer nicht erfindungsgemäßen Ausführungsform,
- Fig. 2: ein hydraulischer Schaltplan mit der hydraulischen Anordnung in einer weiteren nicht erfindungsgemäßen Ausführungsform,
- Fig. 3: ein hydraulischer Schaltplan mit der hydraulischen Anordnung in einer ersten Asuführungsform der Erfindung und
- Fig. 4: ein hydraulischer Schaltplan mit der hydraulischen Anordnung in einer weiteren Ausführungsform der Erfindung.

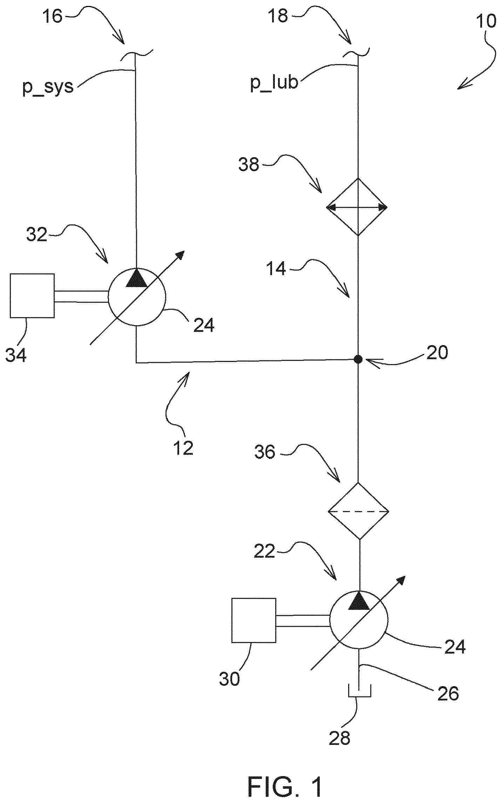

Fig. 1 zeigt eine hydraulische Anordnung 10 für eine hier nicht explizit dargestellte Getriebeeinheit eines Fahrzeugs, d.h. ein Fahrzeuggetriebe. Die Anordnung 10 kann teilweise innerhalb und teilweise außerhalb der Getriebeeinheit oder auch vollständig innerhalb der Getriebeeinheit angeordnet sein.

Die Anordnung 10 weist einen hydraulischen Systempfad 12 und einen hydraulischen Schmierungspfad 14 auf. Der Systempfad 12 führt zu einem hydraulischen Systemkreislauf 16 mit einem aktuellen Systemdruck p_sys. Der Schmierungspfad 14 führt zu einem hydraulischen Schmierungskreislauf 18 mit einem aktuellen Schmierungsdruck p_lub.

Der Systemkreislauf 16 führt zu mindestens einer Getriebekupplung und ggf. weiteren Bauteilen wie etwa einer Schaltgabel. Der Schmierungskreislauf 18 dient einer kontinuierlichen Schmierung der relevanten Bauteile der Getriebeeinheit.

Die Anordnung 10 enthält eine hydraulische Abzweigungsstelle 20, an der ausgangsseitig die beiden Pfade 12, 14 hydraulisch angeschlossen sind. Eingangsseitig ist an die Abzweigungsstelle 20 eine Zentral-Pumpe 22 in Form einer Verstellpumpe 24 hydraulisch angeschlossen. Die Zentral-Pumpe 22 fördert ein Hydraulikmedium (z.B. Öl) in Richtung des Systempfades 12 und des Schmierungspfades 14. Die Zentral-Pumpe 22 ist mit einer Saugleitung 26 an einen das Hydraulikmedium enthaltenden Hydraulikbehälter 28 bzw. Sumpf angeschlossen. Die Zentral-Pumpe 22 wird von einer Zentral-Antriebseinheit 30 (z.B. Antriebs- bzw. Verbrennungsmotor des Fahrzeugs, Elektromotor) angetrieben.

In den Systempfad 12 ist eine System-Pumpe 32 in Form einer weiteren Verstellpumpe 24 integriert. Sie fördert Hydraulikmedium in Richtung des Systemkreislaufes 16 und wird von einer System-Antriebseinheit 34 (z.B. Antriebs- bzw. Verbrennungsmotor des Fahrzeugs, Elektromotor) angetrieben.

Bei der Zentral-Antriebseinheit 30 und der System-Antriebseinheit 34 kann es sich um physisch unterschiedliche Antriebseinheiten oder um eine einzige Antriebseinheit handeln, die für den Antrieb beider Pumpen 22, 32 verwendet wird. Die beiden Pumpen 22, 32 können identisch oder unterschiedlich dimensioniert sein.

In Fig. 1 ist zur Reinigung des Hydraulikmediums ein zwischen der Abzweigungsstelle 20 und der Zentral-Pumpe 22 hydraulisch angeschlossener Filter 36 vorgesehen. In den Schmierungspfad 14 ist ein Mediumkühler 38 zur Kühlung des Hydraulikmediums integriert. Entgegen der Darstellung in Fig. 1 kann der Mediumkühler 38 auch zwischen der Abzweigungsstelle 20 und der Zentral-Pumpe 22 hydraulisch angeschlossen sein.

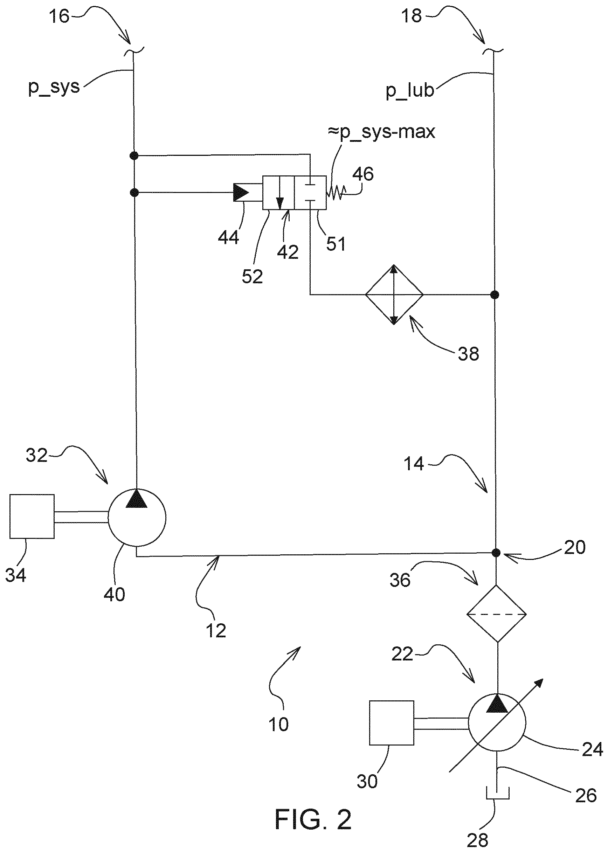

Die nicht erfindungsgemäße Ausführungsform der Anordnung 10 gemäß Fig. 2 unterscheidet sich von der Variante gemäß Fig. 1 unter anderem dadurch, dass die System-Pumpe 32 als eine Konstantpumpe 40 ausgebildet ist. Außerdem ist zwischen dem Systemkreislauf 16 und dem Schmierungskreislauf 18 ein Steuerventil 42 hydraulisch angeschlossen. Es ist als ein 2/2-Wegeventil mit zwei Anschlüssen und zwei unterschiedlichen Schaltstellungen ausgebildet.

Das Steuerventil 42 bewirkt in Abhängigkeit von dem aktuellen Systemdruck p_sys entweder eine hydraulische Verbindung oder eine hydraulische Unterbrechung zwischen dem Systemkreislauf 16 und dem Schmierungskreislauf 18. Zu diesem Zweck weist das Steuerventil 42 einen Steuereingang 44 auf, an dem der aktuelle Systemdruck p_sys anliegt. Gegen den Druck am Steuereingang 44 wirkt der Federdruck einer Rückstellfeder 46. Dieser Federdruck ist etwa auf einen vorbestimmten maximalen Systemdruck p_sys-max eingestellt.

In Fig. 2 befindet sich das Steuerventil 42 in seiner Grundstellung (erste Steuer-Schaltstellung S1), welche eine hydraulische Unterbrechung zwischen beiden Kreisläufen 16, 18 bewirkt. Dabei liegt der aktuelle Systemdruck p_sys unterhalb des vorbestimmten maximalen Systemdruckes p_sys-max. Sobald ein steigender Systemdruck p_sys den Federdruck der Rückstellfeder 46 bzw. den vorbestimmten maximalen Systemdruckes p_sys-max erreicht oder überschreitet, wird das Steuerventil 42 in seine zweite Steuer-Schaltstellung S2 überführt. Diese zweite Steuer-Schaltstellung S2 bewirkt eine hydraulische Verbindung zwischen beiden Kreisläufen 16, 18. Hierdurch kann der Schmierungskreislauf 18 mit überschüssigem Hydraulikmedium des Systemkreislaufes druckstabilisierend versorgt werden. Vorteilhaft werden zu hohe Systemdrücke p_sys im Systemkreislauf 16 automatisch vermieden. Verlustleistungen des Fahrzeuggetriebes werden reduziert und dessen Effizienz erhöht.

Bei der Anordnung 10 gemäß Fig. 2 ist der Mediumkühler 38 hydraulisch zwischen dem Ausgang des Steuerventils 42 und dem Schmierungskreislauf 18 angeordnet. Hierdurch können im Vergleich zur Ausführungsform gemäß Fig. 1 Druckverluste im Schmierungskreislauf 18 vermieden werden.

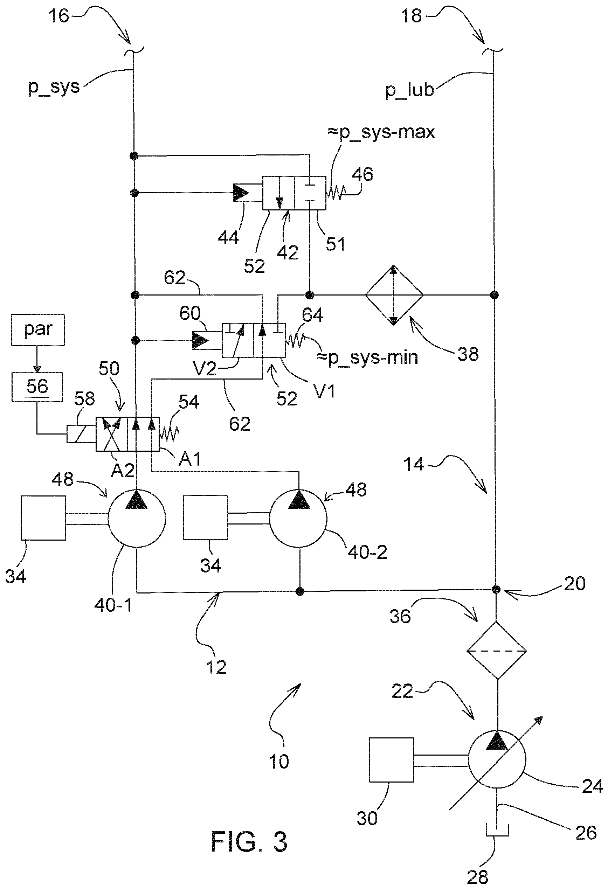

Die erfindungsgemäße Ausführungsform der Anordnung 10 gemäß Fig. 3 unterscheidet sich von der Variante gemäß Fig. 2 darin, dass die System-Pumpe 32 durch eine Pumpengruppe 48 mit zwei Konstantpumpen 40-1, 40-2 ersetzt ist. Außerdem ist an die Pumpengruppe 48 ausgangsseitig ein Auswahl-Ventil 50 hydraulisch angeschlossen. Zudem ist an das Auswahl-Ventil 50 ausgangsseitig ein Verstärker-Ventil 52 hydraulisch angeschlossen.

Das Auswahl-Ventil 50 des Systempfades 12 ist als ein 4/2-Wegevenil mit vier Anschlüssen und zwei Schaltstellungen ausgebildet. Durch Umschalten des Auswahl-Ventils 50 kann der zum Systemkreislauf 16 fließende Volumenstrom bzw. das Verdrängungsvolumen der Pumpengruppe 48 diskret verstellt werden. Hierbei ist es vorteilhaft, wenn die beiden Konstantpumpen 40-1, 40-2 hinsichtlich ihres Verdrängungsvolumens nicht etwa identisch, sondern unterschiedlich dimensioniert sind. Vorzugsweise ist die erste Konstantpumpe 40-1 für ein hohes Verdrängungsvolumen (Einsatz bei vergleichsweise niedrigen Antriebsdrehzahlen) dimensioniert, während die zweite Konstantpumpe 40-2 für ein niedriges Verdrängungsvolumen (Einsatz bei vergleichsweise hohen Antriebsdrehzahlen) dimensioniert ist.

Mittels Umschalten des Auswahl-Ventils 50 kann ausgewählt werden, welche Konstantpumpe 40-1 oder 40-2 mit dem Systemkreislauf 16 zu dessen Druckversorgung hydraulisch unmittelbar verbunden ist. In der Grundstellung (Auswahl-Schaltstellung A1) gemäß Fig. 3 ist die erste Konstantpumpe 40-1 mit dem Systemkreislauf 16 hydraulisch unmittelbar verbunden.

Das Auswahl-Ventil 50 ist in seiner Auswahl-Schaltstellung A1 durch den Federdruck einer Rückstellfeder 54 gehalten. Eine Steuerelektronik 56 beaufschlagt bzw. aktiviert einen Elektromagneten 58 des Auswahl-Ventils 50, um letzteres in seine zweite Auswahl-Schaltstellung A2 zu überführen. Die Steuerelektronik 56 aktiviert und deaktiviert den Elektromagneten 58 in Abhängigkeit von mindestens einer erfassten physikalischen Größe bzw. Parameter par. Als Parameter par kommen beispielsweise in Frage: die Drehzahl der Antriebseinheiten 34 für die Konstantpumpen 40-1, 40-2, ein aktueller Hydraulikdruck, insbesondere der Systemdruck p_sys und/oder Schmierungsdruck p_lub, eine Getriebeeingangsleistung, ein Drehmoment oder eine Drehzahl am Getriebeeingang, Schaltvorgänge oder ein geschalteter Gang, die Energieintensität der Schaltvorgänge. Hierdurch ist eine flexible und bedarfsgerechte Druckversorgung des Systemkreislaufes 16 möglich mit einer entsprechend vorteilhaften Reduzierung von hydraulischen Verlustleistungen.

An einem Steuereingang 60 des Verstärker-Ventils 52 liegt der aktuelle Systemdruck p_sys an. Hierdurch kann das Verstärker-Ventil 52 in Abhängigkeit von dem aktuellen Systemdruck p_sys einen parallelen hydraulischen Nebenpfad 62 zwischen dem Auswahl-Ventil 50 des Systempfades 12 und dem Systemkreislauf 16 hydraulisch schließen oder unterbrechen. In Fig. 3 nimmt das Verstärker-Ventil 52 seine Grundstellung (Verstärker-Schaltstellung V1) ein, in der der Nebenpfad 62 hydraulisch geschlossen ist. Sobald das Verstärker-Ventil 52 seine zweite Verstärker-Schaltstellung V2 einnimmt, ist der Nebenpfad 62 hydraulisch unterbrochen. Auf diese Weise kann das Verstärker-Ventil 52 in seiner ersten Schaltstellung V1 eine raschere Versorgung des Systemkreislaufes 16 mit höherem Hydraulikdruck bewirken. Dies ist beispielsweise dann sinnvoll, wenn sich der aktuelle Systemdruck p_sys unterhalb eines vorbestimmten minimalen Systemdruckes p_sys-min befindet. Dann nimmt das Verstärker-Ventil 52 seine erste Schaltstellung V1 ein, wenn dessen Rückstellfeder 64 etwa auf den Wert des vorbestimmten minimalen Systemdruckes p_sys-min eingestellt ist. Bei steigendem Systemdruck p_sys kann das Verstärker-Ventil 52 nach Erreichen oder Überschreiten des vorbestimmten minimalen Systemdruckes p_sys-min seine zweite Verstärker-Schaltstellung V2 einnehmen. Diese Schaltstellung V2 bewirkt eine hydraulische Verbindung zwischen dem Auswahl-Ventil 50 und dem Schmierungskreislauf 18, so dass für den Systemkreislauf 16 nicht mehr benötigtes Hydraulikmedium dem Schmierungskreislauf 18 zur Verfügung gestellt werden kann.

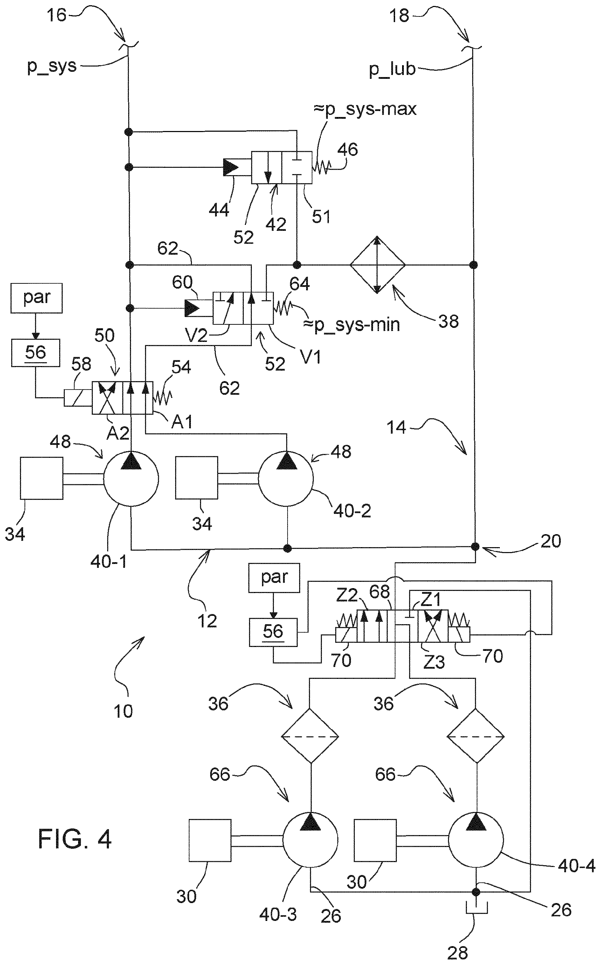

Die weitere erfindungsgemäße Ausführungsform der Anordnung 10 gemäß Fig. 4 unterscheidet sich von der Variante gemäß Fig. 3 darin, dass die Zentral-Pumpe 22 durch eine Pumpenkombination 66 mit zwei Konstantpumpen 40-3, 40-4 ersetzt ist. Außerdem ist zwischen der Abzweigungsstelle 20 und der Pumpenkombination 66 ein zentrales Auswahl-Ventil 68 hydraulisch angeschlossen. Dieses ist als ein 4/3-Wegeventil mit vier Anschlüssen und drei unterschiedlichen Schaltstellungen Z1, Z2, Z3 ausgebildet. Des Weiteren ist am Ausgang der beiden Konstantpumpen 40-3, 40-4 jeweils ein Filter 36 zur Reinigung des Hydraulikmediums angeschlossen.

Mittels des zentralen Auswahl-Ventils 68 kann das von der Pumpenkombination 66 in Richtung des Schmierungskreislaufes 18 geförderte Hydraulikmedium hinsichtlich des Verdrängungsvolumens bzw. des Volumenstromes diskret verstellt werden. Hierdurch kann der Schmierungskreislauf 18 mit Hydraulikdruck bedarfsgerecht versorgt werden und die hydraulischen Verlustleistungen können reduziert werden. Entsprechend der drei unterschiedlichen Schaltstellungen Z1, Z2, Z3 des zentralen Auswahl-Ventils 68 sind drei unterschiedliche Werte des Gesamt-Verdrängungsvolumens bzw. des Gesamt-Volumenstromes der Pumpenkombination 66 vorgesehen, nämlich der Volumenstrom der Konstantpumpe 40-3 oder der Konstantpumpe 40-4 oder die Summe der Volumenströme beider Konstantpumpen 40-3, 40-4. Hierbei sind die beiden Konstantpumpen 40-3, 40-4 hinsichtlich ihres Verdrängungsvolumens bzw. Volumenstromes unterschiedlich dimensioniert.

Die unterschiedlichen Schaltstellungen Z1, Z2, Z3 des zentralen Auswahl-Ventils 68 generieren unterschiedliche hydraulische Verbindungen zwischen der Pumpenkombination 66 und der Abzweigungsstelle 20. Für die diskrete Verstellung des Gesamt-Verdrängungsvolumens bzw. des Gesamt-Volumenstromes der Pumpenkombination 66 werden zwei Elektromagneten 70 des zentralen Auswahl-Ventils 68 mittels der Steuerelektronik 56 (oder einer anderen geeigneten Steuerelektronik) angesteuert und hierdurch aktiviert bzw. deaktiviert. Diese Ansteuerung erfolgt in Abhängigkeit von einer erfassten physikalischen Größe bzw. Parameter par. Als Parameter par kommen beispielsweise in Frage: die Drehzahl der Antriebseinheiten 30 für die Konstantpumpen 40-3, 40-4, ein aktueller Hydraulikdruck, insbesondere der Systemdruck p_sys und/oder Schmierungsdruck p_lub, eine Getriebeeingangsleistung, ein Drehmoment oder eine Drehzahl am Getriebeeingang, Schaltvorgänge oder ein geschalteter Gang, die Energieintensität der Schaltvorgänge. Hierdurch ist eine flexible und bedarfsgerechte Druckversorgung des Schmierungskreislaufes 18 möglich mit einer entsprechend vorteilhaften Reduzierung von hydraulischen Verlustleistungen. Außerdem kann die diskrete Verstellung der Pumpenkombination 66 auch eine bedarfsgerechte Druckversorgung des Systemkreislaufes 16 unterstützen.

Es sei darauf hingewiesen, dass die in den Zeichnungen offenbarten Details teilweise schematisch und nicht notwendigerweise maßstabsgetreu dargestellt sind.

## Patentansprüche

1. Hydraulische Anordnung (10) für ein Fahrzeuggetriebe, mit einem hydraulischen Systempfad (12), welcher zu einem hydraulischen Systemkreislauf (16) mit einem Systemdruck (p_sys) führt, einem hydraulischen Schmierungspfad (14), welcher zu einem hydraulischen Schmierungskreislauf (18) mit einem Schmierungsdruck (p_lub) führt, und einer Abzweigungsstelle (20), an der ausgangsseitig die beiden hydraulischen Pfade (12, 14) angeschlossen sind, wobei an die Abzweigungsstelle (20) eingangsseitig eine Verstellpumpe (24) oder eine mindestens zwei Konstantpumpen (40-3, 40-4) aufweisende Pumpenkombination (66) hydraulisch angeschlossen ist, **dadurch gekennzeichnet, dass** an die Abzweigungsstelle (20) ausgangsseitig in den Systempfad (12) integriert eine mindestens zwei Konstantpumpen (40-1, 40-2) aufweisende Pumpengruppe (48) hydraulisch angeschlossen ist, wobei an der Pumpengruppe (48) des Systempfades (12) ausgangsseitig ein Auswahl-Ventil (50) angeschlossen ist, welches mehrere unterschiedliche Schaltstellungen (A1, A2) aufweist für unterschiedliche hydraulische Verbindungen der Pumpengruppe (48) mit dem Systemkreislauf (16), wobei an das Auswahl-Ventil (50) des Systempfades (12) ausgangsseitig ein zwischen unterschiedlichen Schaltstellungen (V1, V2) umschaltbares Verstärker-Ventil (52) angeschlossen ist, welches in Abhängigkeit von dem Systemdruck (p_sys) einen parallelen Nebenpfad (62) zwischen dem Auswahl-Ventil (50) des Systempfades (12) und dem Systemkreislauf (16) hydraulisch schließt oder unterbricht.

2. Anordnung nach Anspruch 1, **dadurch gekennzeichnet, dass** zwischen der Abzweigungsstelle (20) und deren eingangsseitiger Pumpenkombination (66) ein Auswahl-Ventil (68) angeschlossen ist, welches mehrere unterschiedliche Schaltstellungen (Z1, Z2, Z3) aufweist für unterschiedliche hydraulische Verbindungen der Pumpenkombination (66) mit der Abzweigungsstelle (20).

3. Anordnung nach Anspruch 1 oder 2, **gekennzeichnet durch** ein Auswahl-Ventil (50, 68) mit mindestens einem Elektromagneten, welcher in Abhängigkeit von einer erfassten physikalischen Größe (par) ansteuerbar ist.

4. Anordnung nach einem der vorhergehenden Ansprüche, **dadurch gekennzeichnet, dass** das Verstärker-Ventil (52)
- bei einem Systemdruck (p_sys) unterhalb eines vorbestimmten minimalen Systemdruckes (p_sys-min) eine Verstärker-Schaltstellung (V1) hat zum hydraulischen Schließen des Nebenpfades (62), und
- ausgehend von einem steigenden Systemdruck (p_sys) nach Erreichen oder Überschreiten des vorbestimmten minimalen Systemdruckes (p_sys-min) eine andere Schaltstellung (V2) einnimmt für eine hydraulische Verbindung zwischen dem Auswahl-Ventil (50) des Systempfades (12) und dem Schmierungskreislauf (18).

5. Anordnung nach einem der vorhergehenden Ansprüche, **dadurch gekennzeichnet, dass** zwischen dem Systemkreislauf (16) und dem Schmierungskreislauf (18) ein Steuerventil (42) hydraulisch angeschlossen ist und zwei unterschiedliche Schaltstellungen (S1, S2) aufweist derart, dass das Steuerventil in Abhängigkeit von seiner Schaltstellung (S1, S2) als eine hydraulische Verbindung oder hydraulische Unterbrechung zwischen beiden Kreisläufen (16, 18) wirkt.

6. Anordnung nach Anspruch 5, **dadurch gekennzeichnet, dass** das Steuerventil (42)
- bei einem Systemdruck (p_sys) unterhalb eines vorbestimmten maximalen Systemdruckes (p_sys-max) eine erste Steuer-Schaltstellung (S1) hat für eine hydraulische Unterbrechung zwischen beiden Kreisläufen (16, 18), und
- ausgehend von einem steigenden Systemdruck (p_sys) bei Erreichen oder Überschreiten des vorbestimmten maximalen Systemdruckes (p_sys-max) eine zweite Steuer-Schaltstellung (S2) einnimmt für eine hydraulische Verbindung zwischen beiden Kreisläufen (16, 18).

7. Anordnung nach einem der vorhergehenden Ansprüche, **gekennzeichnet durch** einen, insbesondere zwischen dem Systemkreislauf (16) und dem Schmierungskreislauf (18) angeordneten, Mediumkühler (38) zur Kühlung eines Hydraulikmediums der Anordnung (10).

## Claims

1. Hydraulic arrangement (10) for a vehicle transmission, having a hydraulic system path (12) that leads to a hydraulic system circuit (16) with a system pressure (p_sys), a hydraulic lubrication path (14) that leads to a hydraulic lubrication circuit (18) with a lubrication pressure (p_lub), and a branching point (20), to the output side of which the two hydraulic paths (12, 14) are connected, wherein a variable displacement pump (24) or a pump combination (66) having at least two fixed displacement pumps (40-3, 40-4) is hydraulically connected to the input side of the branching point (20), **characterized in that** a pump assembly (48) having at least two fixed displacement pumps (40-1, 40-2) is hydraulically connected to the output side of the branching point (20) in a manner integrated into the system path (12), wherein a selection valve (50) is connected to the output side of the pump assembly (48) of the system path (12), said selection valve (50) having a plurality of different switch positions (A1, A2) for different hydraulic connections of the pump assembly (48) to the system circuit (16), wherein a boost valve (52) that is switchable between different switch positions (V1, V2) is connected to the output side of the selection valve (50) of the system path (12), said boost valve (52) hydraulically closing or interrupting a parallel secondary path (62) between the selection valve (50) of the system path (12) and the system circuit (16) depending on the system pressure (p_sys).

2. Arrangement according to Claim 1, **characterized in that** a selection valve (68) is connected between the branching point (20) and the input-side pump combination (66) thereof, said selection valve (68) having a plurality of different switch positions (Z1, Z2, Z3) for different hydraulic connections of the pump combination (66) to the branching point (20).

3. Arrangement according to Claim 1 or 2, **characterized by** a selection valve (50, 68) with at least one electromagnet that is controllable depending on a sensed physical variable (par).

4. Arrangement according to any of the preceding claims, **characterized in that** the boost valve (52),
- at a system pressure (p_sys) below a predetermined minimum system pressure (p_sys-min), has a boost switch position (V1) for hydraulically closing the secondary path (62), and,
- starting from an increasing system pressure (p_sys), after the predetermined minimum system pressure (p_sys-min) has been reached or exceeded, takes up another switch position (V2) for a hydraulic connection between the selection valve (50) of the system path (12) and the lubrication circuit (18).

5. Arrangement according to any of the preceding claims, **characterized in that** a control valve (42) is hydraulically connected between the system circuit (16) and the lubrication circuit (18) and has two different switch positions (S1, S2) such that, depending on its switch position (S1, S2), the control valve acts as a hydraulic connection or a hydraulic interruption between the two circuits (16, 18).

6. Arrangement according to Claim 5, **characterized in that** the control valve (42),
- at a system pressure (p_sys) below a predetermined maximum system pressure (p_sys-max), has a first control switch position (S1) for a hydraulic interruption between the two circuits (16, 18), and,
- starting from an increasing system pressure (p_sys), when the predetermined maximum system pressure (p_sys-max) is reached or exceeded, takes up a second control switch position (S2) for a hydraulic connection between the two circuits (16, 18).

7. Arrangement according to any of the preceding claims, **characterized by** a medium cooler (38), arranged in particular between the system circuit (16) and the lubrication circuit (18), for cooling a hydraulic medium of the arrangement (10).

## Revendications

1. Agencement hydraulique (10) pour une transmission de véhicule, comprenant un chemin de système hydraulique (12), lequel mène à un circuit de système hydraulique (16) présentant une pression de système (p_sys), un chemin de lubrification hydraulique (14), lequel mène à un circuit de lubrification hydraulique (18) présentant une pression de lubrification (p_lub), et un point de bifurcation (20), auquel les deux chemins hydrauliques (12, 14) sont raccordés du côté de la sortie, une pompe à cylindrée variable (24) ou une combinaison de pompes (66) présentant au moins deux pompes à cylindrée constante (40-3, 40-4) étant raccordée au point de bifurcation (20) du côté de l'entrée, **caractérisé en ce qu'**un groupe de pompes (48) présentant au moins deux pompes à cylindrée constante (40-1, 40-2) est connecté de manière hydraulique au point de bifurcation (20) du côté de la sortie de manière intégrée dans le chemin de système (12), une soupape de sélection (50) étant raccordée au groupe de pompes (48) du chemin de système (12) du côté de la sortie, laquelle soupape de sélection présente plusieurs positions de commutation différentes (Al, A2) pour différentes connexions hydrauliques du groupe de pompes (48) au circuit de système (16), une soupape d'amplification (52) pouvant être commutée entre différentes positions de commutation (V1, V2) étant raccordée à la soupape de sélection (50) du chemin de système (12) du côté de la sortie, laquelle soupape d'amplification ferme ou interrompt de manière hydraulique un chemin secondaire parallèle (62) entre la soupape de sélection (50) du chemin de système (12) et le circuit de système (16) en fonction de la pression de système (p_sys).

2. Agencement selon la revendication 1, **caractérisé en ce qu'**une soupape de sélection (68) est raccordée entre le point de bifurcation (20) et sa combinaison de pompes (66) du côté de l'entrée, laquelle soupape de sélection présente plusieurs positions de commutation (Z1, Z2, Z3) différentes pour différentes connexions hydrauliques de la combinaison de pompes (66) au point de bifurcation (20).

3. Agencement selon la revendication 1 ou 2, **caractérisé par** une soupape de sélection (50, 68) comprenant au moins un électroaimant, lequel peut être commandé en fonction d'une grandeur physique détectée (par).

4. Agencement selon l'une des revendications précédentes, **caractérisé en ce que** la soupape d'amplification (52)
- à une pression de système (p_sys) inférieure à une pression de système minimale prédéfinie (p_sys-min), a une position de commutation d'amplification (V1) pour la fermeture hydraulique du chemin secondaire (62), et
- à partir d'une pression de système croissante (p_sys), après que la pression de système minimale prédéfinie (p_sys-min) a été atteinte ou dépassée, adopte une autre position de commutation (V2) pour une connexion hydraulique entre la soupape de sélection (50) du chemin de système (12) et le circuit de lubrification (18).

5. Agencement selon l'une des revendications précédentes, **caractérisé en ce qu'**une soupape de commande (42) est raccordée de manière hydraulique entre le circuit de système (16) et le circuit de lubrification (18) et présente deux positions de commutation différentes (S1, S2), de telle sorte que la soupape de commande, en fonction de sa position de commutation (S1, S2), agit comme une connexion hydraulique ou une interruption hydraulique entre les deux circuits (16, 18).

6. Agencement selon la revendication 5, **caractérisé en ce que** la soupape de commande (42)
- à une pression de système (p_sys) inférieure à une pression de système maximale prédéfinie (p_sys-max), a une première position de commutation de commande (S1) pour une interruption hydraulique entre les deux circuits (16, 18), et
- à partir d'une pression de système croissante (p_sys), lorsque la pression de système maximale prédéfinie (p_sys-max) est atteinte ou dépassée, adopte une deuxième position de commutation de commande (S2) pour une connexion hydraulique entre les deux circuits (16, 18).

7. Agencement selon l'une des revendications précédentes, **caractérisé par** un refroidisseur de fluide (38), disposé en particulier entre le circuit de système (16) et le circuit de lubrification (18), servant au refroidissement d'un fluide hydraulique de l'agencement (10).
